# EUROPEAN PATENT APPLICATION

(11) **EP 4 628 272 A1**
(43) Date of publication of application: **08.10.2025**
(21) Application number: 24168817.5
(22) Date of filing: 05.04.2024
(51) Int. Cl.: B29B 17/02, B09B 3/80, C08J 11/06

(54) **METHOD FOR RECYCLING A COATED GLASS MEMBRANE COMPRISING A GLASS CORE CLOTH AND A FLUOROPOLYMER COATING**

(71) Applicant: Serge Ferrari SAS, 38110 Saint Jean de Soudain (FR)
(72) Inventor: SIEMENS, Peter Michael, 47906 KEMPEN (DE); ESPIARD, Philippe, 60270 GOUVIEUX (FR)
(74) Representative: Ipsilon

(57) **Abstract**

The present invention relates to a method for selective dissolution of a coated glass membrane comprising a glass core cloth and at least one layer of fluoropolymer coating, said method comprising the following steps :
- providing pieces of the coated glass membrane,
- dipping said pieces into an alkaline solution having a pH higher or equal to 10,
- heating said alkaline solution, at a temperature above 50°C, to solubilize the glass core cloth of said pieces,
- performing a solid/liquid separation to recover said fluoropolymer coating.

## Description

### TECHNICAL FIELD OF THE INVENTION

The present invention relates to the technical field of the recycling of coated glass membranes. More particularly, the invention concerns a method for selective dissolution of a coated glass membrane comprising a glass core cloth and at least one layer of fluoropolymer coating.

### BACKGROUND OF THE INVENTION

Since, environmental pollution has become a major issue, industries are constantly seeking innovative solutions to reduce or recycle waste resulting from their activities. More specifically, the glass fiber industry loses million tons of glass scraps due to the complexity of glass recycling. Glass fibers processed as glass fiber mats are often coated with resin (cured or uncured) or fluoropolymers. Several methods have been used to remove resin coatings from glass fibers. For example, US 7,934,393 B2 describes a method for removing a resin coating comprising the immersion of the fibers in a water-based fluid inside a hydrothermal reactor, at high pressure and temperature.

Fluoropolymer coating, such as polytetrafluoroethylene (PTFE), are frequently used due to their inert and hardness properties. Some devices for processing PTFE by irradiation and grinding are known, for example from EP 1 137 657 B2. However, these devices are quite bulky and energy-consuming. Moreover, they are not intended for PFTE coated materials.

Thus, the applicant found a method to efficiently separate the fluoropolymer coating and the glass core cloth of a coated glass membrane, without requiring high energy consumption.

One aim of the invention is to separate the fluoropolymers from glass fibers in order to make the fluoropolymer part of the composite accessible for existing fluoropolymer recycling technologies.

### DESCRIPTION OF THE INVENTION

The present invention relates to a method for selective dissolution of a coated glass membrane comprising a glass core cloth and at least one layer of fluoropolymer coating, said method comprising the following steps :
- providing pieces of the coated glass membrane,
- dipping said pieces into an alkaline solution having a pH higher or equal to 10,
- heating said alkaline solution, at a temperature above 50°C, to solubilize the glass core cloth of said pieces,
- performing a solid/liquid separation to recover said fluoropolymer coating.

In the present invention, the "coated glass membrane" can be referred to by "glass membrane", "coated membrane", "membrane". Similarly, the glass core cloth can be referred to by "glass cloth", "core cloth" or "cloth".

In the present invention, "selective dissolution" means that only the glass core cloth is dissolved. The layer(s) of fluoropolymer coating is not dissolved.

The term "dissolved" means that the glass core cloth is solubilized in the alkaline solution solvent by going from solid to liquid state. It implies that at least 45 wt% of the glass core cloth is solubilized, relative to the total mass of the glass core cloth comprised in the coated glass membrane before the selective dissolution.

The term "fully dissolved" means that more than 99 wt% of the glass core cloth is solubilized, relative to the total mass of the glass core cloth comprised in the coated glass membrane before the selective dissolution.

### Coated glass membrane

The coated glass membrane can be recovered from roofing membranes from tensile structures or conveyor belts, for example, and cut into pieces.

The aim of this step is to make the slice of the coated glass membrane accessible to the alkaline solution.

Preferably, the coated glass membrane is cut with any suitable tool in pieces of coated glass membrane. The means and methods employed for cutting the membrane are not restrictive.

The geometry of the pieces is chosen to facilitate access of the alkaline solution to the entire glass core, in the shortest possible time. Advantageously, the pieces of the coated glass membrane comprise at least two points of the glass core cloth accessible to the alkaline solution, said two points having a distance between them advantageously lower than 5 cm.

According to the present invention, the coated glass membrane has an area density comprised between 100 g/m² and 2000 g/m², preferably between 150 g/m² and 1800 g/m².

### Glass core cloth

The glass core cloth can be a woven fabric, a non-woven cloth, a grid or at least one yarn.

According to the present invention, the glass core cloth has an area density comprised between 50 g/m² and 1200 g/m², preferably between 75 g/m² and 1000 g/m², more preferably between 100 g/m² and 800 g/m².

Preferably, the glass core cloth comprises at least one type of glass fiber, the glass fiber of said type comprising:
- 40 wt% to 76 wt% of SiO₂,
- 10 wt% to 25 wt% in total of Na₂O and K₂O,
- 10 wt% to 16 wt% in total of CaO and MgO,
- 0 wt to 18 wt% of B₂O,
- 0 wt% to 5 wt% of Al₂O₃.
by weight, based on the total weight of the glass fiber of said type.

Additionally, the glass fiber can comprise P₂O₅, Fe₂O₃, SrO, LiO and F, preferably up to 10% by weight, based on the total weight of the glass fiber.

In a specific embodiment, the glass fiber comprises:
- 66 wt% to 73 wt% of SiO₂,
- 12 wt% to 17 wt% in total of Na₂O and K₂O,
- 13 wt% to 16 wt% in total of CaO and MgO,
- 2 wt% to 3 wt% of B₂O₃,
- 0 wt% to 0.3 wt% of Al₂O₃.
by weight, based on the total weight of the glass fiber of said type.

Additionally, the glass fiber can comprise P₂O₅, Fe₂O₃, SrO, LiO and F, preferably up to 10% by weight, based on the total weight of the glass fiber.

In another embodiment, the glass fiber comprises:
- 40 wt% to 66 wt% of SiO₂,
- 17 wt% to 25 wt% in total of Na₂O and K₂O,
- 10 wt% to 13 wt% in total of CaO and MgO,
- 3 wt% to 18 wt% of B₂O₃,
- 0.3 wt% to 5 wt% of Al₂O₃.

Additionally, the glass fiber can comprise P₂O₅, Fe₂O₃, SrO, LiO and F, preferably up to 10% by weight, based on the total weight of the glass fiber.

According to the present invention the type of glass fiber can be ArcBiox^{™} X4 (ABM4) or C-type glass from glass wool insulation panel fiber.

The glass core cloth can comprise more than one type of glass fiber, for example ABM4 and C-type glass from glass wool insulation panel fiber.

Preferably, the glass core cloth cannot comprise E-glass fiber.

According to the invention, the glass fiber can have a nominal filament diameter comprised between 2 and 20 µm, preferably between 3 and 17 µm.

Preferably, the glass fibers have a Young's modulus (E) comprised between 60 and 85 GPa.

Preferably, the glass fibers have a tensile strength comprised between 3000 and 4500 MPa.

### Fluoropolymer coating

According to the invention, the coated glass membrane can comprise at least one layer of fluoropolymer coating. Advantageously, it can comprise multiple layers of fluoropolymer coating. Typically, it can comprise up to 10 coating layers, but more are possible if needed in order to reach the specific technical requirements of the coated glass membrane for its intended use.

When the coated glass membrane comprises more than one layer of fluoropolymer coating, the layers can have the same polymeric composition or different polymeric compositions.

The coated glass membrane comprises advantageously at least two layers of fluoropolymer coating, two of said layers having the same polymeric composition.

As an alternative, the coated glass membrane comprises at least two layers of fluoropolymer coating, two of said layers each comprising different fluoropolymers.

When the glass core cloth is at least a yarn, each yarn is coated by at least one layer of fluoropolymer coating.

The at least one layer of fluoropolymer coating comprises preferably at least one fluoropolymer selected in the group comprising: polytetrafluoroethylene (PTFE), polyvinyl fluoride (PVF), polyvinylidene fluoride (PVDF), perfluoro alkoxy (PFA), polychlorotrifluoroethylene (PCTFE), fluorinated ethylene propylene (FEP), ethylene tetrafluoroethylene (ETFE), and mixtures thereof.

Advantageously, the fluoropolymer is polytetrafluoroethylene.

In other embodiments, the at least one layer of fluoropolymer coating comprises different fluoropolymers. For example, each layer can comprise a combination of at least two different fluoropolymers.

For instance, the at least one layer of fluoropolymer coating can comprise PTFE and FEP, or PTFE and PFA, or PVDF and PVF, or PVDF and PTFE, or FEP and PFA. Preferred mixtures are PTFE and PFA, or PTFE and FEP, PFA and FEP, or PTFE and FEP and PFA.

Advantageously the fluoropolymer coating cannot be solubilized in the conditions of the method according to the present invention.

### Alkaline solution

The pieces of the coated glass membrane are dipped into an alkaline solution having a pH higher or equal to 10. The pH can be equal to 11, 12, 13 or even 14. Preferably, the pH is equal to or higher than 12.

Preferably, the alkaline solution is a Bronsted base solution selected in the group comprising: alkaline metal hydroxides, alkaline earth metal hydroxides and ammonia.

In a preferred embodiment, the alkaline solution is a NaOH aqueous solution with a pH higher or equal to 12.

Advantageously, said alkaline solution is heated, at a temperature above 50°C, preferably above 70°C, to solubilize the glass core cloth of the pieces of the coated glass membrane.

Preferably, the temperature is between 70°C and 125°C. Advantageously, the temperature is 105°C or 110°C.

Preferably, the step of heating the alkaline solution is performed at a pressure higher than 10⁵ Pa.

In some embodiments, the pieces of coated glass membrane that have not been entirely solubilized are washed with an aqueous solution and dipped again into an alkaline solution, to improve dissolution.

Preferably, the dissolution is performed in more than one step. For example, the membrane can be dipped in alkaline solution for 1 to 10 hours for dissolution, then heated in distilled water for 1 to 2 hours. Afterwards, the membrane can be immersed again in the alkaline solution for 1 to 10 hours. These steps may be repeated several times.

Advantageously, the pieces of coated glass membrane are fully dissolved after 55 hours.

In some embodiments, the alkaline solution can be heated in an autoclave.

In specific embodiments, the alkaline solution is stirred to accelerate the dissolution.

### Solid/ liquid separation

Once at least 90 wt% of the glass core cloth is solubilized, a solid/liquid separation is performed to recover the fluoropolymer coating. The solid/liquid separation can be a filtration or a centrifugation. For example, it can be vacuum filtration, tangential filtration, ultrafiltration, without being limited to these techniques.

Preferably, the fluoropolymer coating recovered from the solid/liquid separation is washed with an aqueous solution, to remove the remaining alkaline solution.

In some embodiments, the fluoropolymer coating can be washed more than once.

### EXAMPLES

### Materials used in the examples:

The examples were made with the following glass fibers:
- ArcBiox^{™} X4 (ABM4) glass fiber with a nominal filament diameter of 17 µm, supplied by ARCTIC BIOMATERIALS;
- C-type glass from glass wool insulation panel "TW-1 040", supplied by SUPERCLASS DÄMMSTOFFE, Germany, comprising up to 7% of organic binder resin and less than 18% by mass combined of the oxides of sodium, potassium, calcium, magnesium, and barium in the glass fibers;
- E-glass fiber with a nominal filament diameter of 4 µm, supplied by AGY;
- E-glass fiber with a nominal filament diameter of 6 µm, supplied by VETROTEX.

**Table 1: comparison of chemical compositions of ABM4 glass fiber and E-glass fiber**

| **Composition** | **E-glass** | **ABM4** |
|---|---|---|
| SiO₂ | 54 | 66-70 |
| Al₂O3 | 15 | <0,3 |
| CaO | 18 | 8-10 |
| MgO | 4 | 5-6 |
| B₂O₃ | 8 | 2-3 |
| F | 0,3 | 0 |
| Fe₂O₃ | 0,3 | <0,3 |
| Na₂O | 0 | 12-15 |
| K2O | 0,4 | 0,5-1 |
| LiD | 0 | 0 |
| P₂O₅ | 0 | 1-2 |
| SrO | 0 | 0-1 |

### Example 1 (invention): PTFE-coated membrane comprising ABM4 glass fiber heated in NaOH, at pH=14

ABM4 glass fiber was woven into a glass fabric with a plain weave construction. The glass fiber has an area density of approximately 940 g/m². The glass fabric was then coated with multiple layers of a PTFE dispersion, where the PTFE was dried and sintered after each layer, until an area density of approximately 1690 g/m² for the coated glass membrane was reached. A circular piece with approximately 3,6 cm diameter is cut from the coated membrane.

This piece is heated in NaOH, at pH 14, for 52 h, at a temperature of approximately 110°C±10°C. After 8 h, 16 h, 24 h, 32 h, 40 h and 52 h, the remaining mass of coated membrane and base fabric are determined. Before measuring the mass, the sample is dried at 120°C for 1 h. The weight loss is calculated relatively to the total weight of the coated membrane as well as relatively to the weight of the glass fabric. After 52 hours, 44.7% of the base fabric was dissolved. The results are reported in Table 2.

**Table 2: weight loss of glass fabric after an exposure time of 52 hours**

| Exposure time (h) | Mass (g) | Coated membrane remaining (%) | Base fabric remaining (%) |
|---|---|---|---|
| 0 | 1.688 | 100 | 100 |
| 8 | 1.610 | 95.4 | 91.7 |
| 16 | 1.538 | 91.1 | 84.0 |
| 24 | 1.482 | 87.8 | 78.1 |
| 32 | 1,400 | 82.9 | 69.4 |
| 40 | 1.377 | 81.6 | 66.9 |
| 52 | 1.268 | 75.1 | 55.3 |

### Example 2 (invention): PTFE-coated membrane comprising ABM4 glass fiber heated in NaOH, at pH 14

ABM4 glass fiber was woven into a glass fabric with a plain weave construction with an area density of approximately 940 g/m². The glass fabric was then coated with multiple layers of a PTFE dispersion, where the PTFE was dried and sintered after each layer, until an area density mass of approximately 1690 g/m² for the coated glass membrane was reached. The coated membrane is cut manually using scissors to smaller pieces of a size ranging 3-8 mm.

The pieces are heated in NaOH, at pH 14, for a total of 25 h, at a temperature of approximately 110°C±10°C. After boiling the sample material every 5 hours in NaOH, at pH 14, they were heated for one hour in distilled water. After every cycle of 5 hours heating at pH 14, followed by one hour heating in water the samples are dried for 1 hour at 120°C and the mass measured. The weight loss is calculated relatively to the total weight of the coated membrane as well as relatively to the weight of the glass fabric. After 25 hours, 58.2% of the base fabric was dissolved. The results are reported in Table 3.

**Table 3: weight loss of glass fabric after an exposure time of 25 hours**

| Exposure time at pH 14 (h) | Mass (g) | Coated membrane remaining (%) | Base fabric remaining (%) |
|---|---|---|---|
| 0 | 1.752 | 100 | 100 |
| 5 | 1.365 | 77.9 | 58.8 |
| 10 | 1.253 | 71.5 | 46.9 |
| 15 | 1.214 | 69.3 | 42.8 |
| 20 | 1.222 | 69.7 | 43.6 |
| 25 | 1.205 | 6S_8 | 41.8 |

### Example 3 (counterexample): PTFE-coated membrane comprising ABM4 glass fiber heated in sulphuric acid (H₂SO₄⁻), at pH = 1

ABM4 glass fiber was woven into a glass fabric with a plain weave construction with an area density of approximately 940 g/m². The glass fabric was then coated with multiple layers of a PTFE dispersion, where the PTFE was dried and sintered after each layer, until an area density of approximately 1690 g/m² for the coated glass membrane was reached. A circular piece having a diameter of approximately 3,6 cm was cut from the coated membrane.

This piece is heated in sulphuric acid at pH 1 for 18 h, at a temperature of approximately 110°C±10°C. After 6 h, 12 h and 18 h the mass is determined. Before measuring the mass, the sample is dried at 120°C for 1 h. The weight loss is calculated relatively to the total weight of the coated membrane as well as relatively to the weight of the glass fabric. After 18 hours, only 0.4% of the base fabric was dissolved. The results are reported in Table 4.

**Table 4: weight loss of glass fabric after an exposure time of 18 hours**

| Exposure time (h) | Mass (g) | Coated membrane remaining (%) | Base fabric remaining (%) |
|---|---|---|---|
| 0 | 1.788 | 100 | 100 |
| 6 | 1.787 | 99.9 | 99.9 |
| 12 | 1.785 | 99.8 | 99.7 |
| 18 | 1.784 | 99.8 | 99.6 |

### Example 4 (counterexample): PTFE-coated membrane made of ABM4 glass fiber heated in sulphuric acid, at pH = 1

ABM4 glass fiber has been woven into a glass fabric with a plain weave construction with an area density of approximately 940 g/m². The glass fabric has then been coated with multiple layers of PTFE dispersion, where the PTFE was dried and sintered after each layer, until an area density of approximately 1690 g/m² for the coated glass membrane is reached. The coated membrane is cut manually using scissors to smaller pieces of a size ranging 3-8 mm.

The pieces are heated in sulphuric acid at pH 1 for 18 h, at a temperature of approximately 110°C±10°C. After 6 h, 12 h and 18 h the mass is determined. Before measuring the mass, the sample is dried at 120°C for 1 h. The weight loss is calculated relatively to the total weight of the coated membrane as well as relatively to the weight of the glass fabric. After 18 hours, only 0.6% of the base fabric was dissolved. The results are reported in Table 5.

**Table 5: weight loss of glass fabric after an exposure time of 18 hours**

| Exposure time (h) | Mass (g) | Coated membrane remaining (%) | Base fabric remaining (%) |
|---|---|---|---|
| 0 | 1.717 | 100 | 100 |
| 6 | 1,713 | 99,8 | 99,6 |
| 12 | 1,712 | 99,7 | 99,5 |
| 18 | 1,711 | 99,7 | 99,4 |

### Example 5 (counterexample): PTFE-coated fabric comprising ABM4 glass fiber heated in hydrochloric acid (HCl), at pH = 1

ABM4 glass fiber has been woven into a glass fabric with a plain weave construction with an area density of approximately 940 g/m². The glass fabric has then been coated with multiple layers of PTFE dispersion, where the PTFE was dried and sintered after each layer, until an area density of approximately 1690 g/m² for the coated glass membrane is reached. A circular piece with approximately 3,6 cm diameter is cut from the coated membrane.

This piece is heated in hydrochloric acid at pH 1 for 18 h, at a temperature of approximately 110°C±10°C. After 6 h, 12 h and 18 h the mass is determined. Before measuring the mass, the sample is dried at 120°C for 1 h. The weight loss is calculated relatively to the total weight of the coated membrane as well as relatively to the weight of the glass fabric. After 18 hours, only 0.3% of the base fabric was dissolved. The results are reported in Table 6.

**Table 6: weight loss of glass fabric after an exposure time of 18 hours**

| Exposure time (h) | Mass (g) | Coated membrane remaining (%) | Base fabric remaining (%) |
|---|---|---|---|
| 0 | 1,755 | 100 | 100 |
| 6 | 1,754 | 99,9 | 99,9 |
| 12 | 1,752 | 99,8 | 99,7 |
| 18 | 1,752 | 99,8 | 99,7 |

### Example 6 (counterexample): PTFE-coated membrane made of ABM4 glass fiber heated in HCI, at pH=1

ABM4 glass fiber has been woven into a glass fabric with a plain weave construction with an area density of approximately 940 g/m². The glass fabric has then been coated with multiple layers of PTFE dispersion, where the PTFE was dried and membrane after each layer, until an area density of approximately 1690 g/m² for the coated glass fabric is reached. The coated fabric is cut manually using scissors to smaller pieces of a size ranging 3-8 mm.

The pieces are heated in hydrochloric acid at pH 1 for 18 h, at a temperature of approximately 110°C±10°C. After 6 h, 12 h and 18 h the mass is determined. Before measuring the mass, the sample is dried at 120°C for 1 h. The weight loss is calculated relatively to the total weight of the coated membrane as well as relatively to the weight of the glass fabric. After 18 hours, only 0.5% of the base fabric was dissolved. The results are reported in Table 7.

**Table 7: weight loss of glass fabric after an exposure time of 18 hours**

| Exposure time (h) | Mass (g) | Coated membrane remaining (%) | Base fabric remaining (%) |
|---|---|---|---|
| 0 | 1.774 | 100 | 100 |
| 6 | 1.772 | 99.9 | 99.8 |
| 12 | 1.770 | 99.8 | 99.6 |
| 18 | 1.769 | 99.7 | 99.5 |

### Example 7 (counterexample): PTFE-coated membrane made of E-glass heated in NaOH, at pH 14

E-glass fiber has been woven into a glass fabric with a plain weave construction with an area density of approximately 480 g/m². The glass fabric has then been coated with multiple layers of PTFE dispersion, where the PTFE was dried and sintered after each layer, until an area density of approximately 1140 g/m² for the coated glass membrane is reached. A circular piece with approximately 3,6 cm diameter is cut from the coated membrane.

The piece is heated in NaOH at pH 14 for a total of 12 h, at a temperature of approximately 110°C±10°C. After 6 h and 12 h the piece is dried for 1 hour at 120°C and the mass measured. The weight loss is calculated relatively to the total weight of the coated membrane as well as relatively to the weight of the glass fabric. After 12 hours, the amount of the base fabric that was dissolved could not be determined. The results are reported in Table 8.

**Table 8: weight loss of glass fabric after an exposure time of 12 hours**

| Exposure time at pH 14 (h) | Mass (g) | Coated membrane remaining (%) | Base fabric remaining (%) |
|---|---|---|---|
| 0 | 1.140 | 100 | 100 |
| 6 | 1.165 | 102.2 | 105.2 |
| 12 | 1.182 | 103.7 | 108.8 |

### Example 8 (counterexample): PTFE-coated membrane made of E-glass heated in NaOH, at pH=14

E-glass fiber has been woven into a glass fabric with a plain weave construction with an area density of approximately 480 g/m². The glass fabric has then been coated with multiple layers of PTFE dispersion, where the PTFE was dried and sintered after each layer, until an area density of approximately 1140 g/m² for the coated glass membrane is reached. The coated membrane is cut manually using scissors to smaller pieces of a size ranging 3-8 mm.

The pieces are heated in NaOH at pH 14 for a total of 12 h, at a temperature of approximately 110°C±10°C. After 6 h and 12 h the samples are dried for 1 hour at 120°C and the mass measured. The weight loss is calculated relatively to the total weight of the coated membrane as well as relatively to the weight of the glass fabric. After 12 hours, the amount of base fabric that was dissolved could not be determined. The results are reported in Table 9.

**Table 9: weight loss of glass fabric after an exposure time of 12 hours**

| Exposure time at pH 14 (h) | Mass (g) | Coated membrane remaining (%) | Base fabric remaining (%) |
|---|---|---|---|
| 0 | 1.136 | 100 | 100 |
| 6 | 1.181 | 104.0 | 109.4 |
| 12 | 1.195 | 105.2 | 112.3 |

In conclusion, only the pieces of coated glass membrane dipped in an alkaline solution at least at pH=10, according to the invention, were dissolved at more than 40 %.

## Claims

1. A method for selective dissolution of a coated glass membrane comprising a glass core cloth and at least one layer of fluoropolymer coating, said method comprising the following steps :
- providing pieces of the coated glass membrane,
- dipping said pieces into an alkaline solution having a pH higher or equal to 10,
- heating said alkaline solution, at a temperature above 50°C, to solubilize the glass core cloth of said pieces,
- performing a solid/liquid separation to recover said fluoropolymer coating.

2. Method according to claim 1, ***characterized in that*** the pieces of the coated glass membrane comprise at least two points of glass core cloth accessible to the alkaline solution, said two points having a distance between them lower than 5 cm.

3. Method according to claim 1 or claim 2, ***characterized in that*** the glass core cloth comprises at least one type of glass fiber, the glass fiber of said type comprising :
- 40 wt% to 76 wt% of SiO₂,
- 10 wt% to 25 wt% in total of Na₂O and K₂O,
- 10 wt% to 16 wt% in total of CaO and MgO,
- 0 wt to 18 wt% of B₂O,
- 0 wt% to 5 wt% of Al₂O₃.
by weight, based on the total weight of the glass fiber of said type.

4. Method according to one of preceding claims, ***characterized in that*** the glass core cloth is a woven fabric, a non-woven cloth, a grid or at least one yarn.

5. Method according to one of preceding claims, ***characterized in that*** the at least one layer of fluoropolymer coating comprises at least one fluoropolymer selected in the group comprising: polytetrafluoroethylene (PTFE), polyvinyl fluoride (PVF), polyvinylidene fluoride (PVDF), perfluoro alkoxy (PFA), polychlorotrifluoroethylene (PCTFE), fluorinated ethylene propylene (FEP), ethylene tetrafluoroethylene (ETFE), and mixtures thereof.

6. Method according to claim 5, ***characterized in that*** the fluoropolymer is polytetrafluoroethylene.

7. Method according to one of preceding claims, ***characterized in that*** the coated glass membrane comprises at least two layers of fluoropolymer coating, two of said layers having the same polymeric composition.

8. Method according to one of preceding claims, ***characterized in that*** the coated glass membrane comprises at least two layers of fluoropolymer coating, two of said layers each comprising different fluoropolymers.

9. Method according to one of preceding claims, ***characterized in that*** the alkaline solution is a Bronsted base solution selected in the group comprising: alkaline metal hydroxides, alkaline earth metal hydroxides and ammonia.

10. Method according to one of preceding claims, ***characterized in that*** the alkaline solution is a NaOH aqueous solution with a pH higher or equal to 12.

11. Method according to one of preceding claims, ***characterized in that*** the step of heating the alkaline solution is performed at a pressure higher than 10⁵ Pa.

12. Method according to one of preceding claims, ***characterized in that*** the solid/liquid separation is a filtration or a centrifugation.

13. Method according to one of preceding claims, ***characterized in that*** the fluoropolymer coating recovered from the solid/liquid separation is washed with an aqueous solution.
